# Europäisches Patentamt
# European Patent Office
# Office européen des brevets

(11) Publication number: **0 241 965**
**B1**

(12) **EUROPEAN PATENT SPECIFICATION**

(45) Date of publication of patent specification: **20.06.90**

(51) Int. Cl.⁵: **A 23 B 4/044**

(21) Application number: **87200492.4**

(22) Date of filing: **17.03.87**

(54) **Method for smoking foodstuffs, device for carrying out said method and smoke sprayer as applied in the device.**

(30) Priority: **17.03.86 NL 8600677**

(43) Date of publication of application:
**21.10.87 Bulletin 87/43**

(45) Publication of the grant of the patent:
**20.06.90 Bulletin 90/25**

(84) Designated Contracting States:
**AT BE CH DE ES FR GB GR IT LI LU NL SE**

(56) References cited:
**WO-A-84/02824
DE-A-2 720 838
FR-A-2 201 038
NL-A-6 901 318
US-A-3 643 587
US-A-3 861 292
US-A-3 896 242
US-A-3 969 996**

(73) Proprietor: **Muvero B.V. Ketel- en
Apparatenfabriek
Stationsweg 120 P.O. Box 33
NL-5800 AA Venray (NL)**

(72) Inventor: **Arts, Hendrikus, Johannes, Michiel
Menuetstraat 20
5802 GC Venray (NL)**

(74) Representative: **Van Kan, Johan Joseph Hubert
et al
Boschdijk 155
NL-5600 AP Eindhoven (NL)**

Courier Press, Leamington Spa, England.

EP 0 241 965 B1

## Description

The invention relates to a method for smoking foodstuffs in a smoking room by supplying smoke to the foodstuff, said smoke being developed from a liquid smoke concentrate to which air is supplied and which is sprayed while being heated. The invention furthermore relates to a device for carrying out such a method, said device also indicated by smoking room hereinafter and to a smoke sprayer connected to the smoking room and forming part of the smoking room.

Smoking foodstuffs such as meat, fish and the like, to increase the preserving action, has been known for a long time already and the foodstuff was thereby exposed to smoke from burning wood, sawdust or the like. The use of a liquid smoke concentrate instead of burning woody products is described in the Dutch patent application 6901318. The foodstuff was thereby brought into contact with a mist of a liquid smoke concentrate in a closed room. Dependent on the foodstuff the smoking room was heated to a temperature above approximately 40°C.

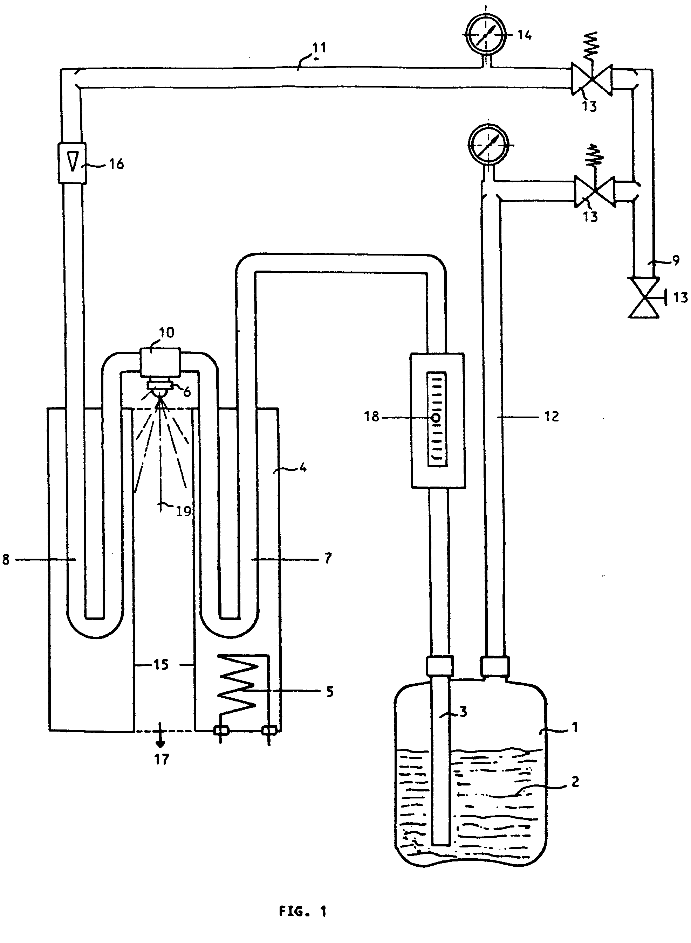

Subsequently various devices have been developed for distributing the liquid smoke concentrate better over the smoking room, whereby in the general the liquid smoke concentrate was put into the room by means of a sprayer together with air and the mist thus obtained was heated in the smoking room itself or in auxiliary equipment so that the mist was converted into smoke. This method and device are described in the US patent specification 3,896,242 whereby it is indicated that the liquid smoke concentrate is supplied via sprayer 63 (Figure 2) to which also air is supplied, after which the mist produced is heated by means of heated air which is supplied-via fan 22 and burner 20 (Figure 1). A device comparable herewith has been indicated in US patent specification 3,969,996, whereby also smoke concentrate is supplied to a space to which also heated air is supplied and the mist produced in an auxiliary space is supplied to the smoking room. The air in the smoking room is then exhausted and recirculated to the air heater and re-mixed with smoke concentrate to be supplied. However, problems arise thereby because with the air to be circulated from the smoking room deposits occur in the motor and the heating element in the air heater. Moreover a deposit will take place on heating elements which are kept at a temperature above e.g. 110°C because a decomposition of several components in the smoke concentrate takes place thereby, somewhat dependent on the composition of the smoke concentrate. For this reason also the devices mentioned in the US patent specification 3,861,292, the French patent application 2,201,038 and the German Offenlegungsschrift 2,720,838 are less satisfactory because the liquid smoke concentrate is thereby sprayed from a sprayer and heated by means of a heating element, whereby there is a chance then that depositing of the smoke concentrate occurs and a non-controlled composition of smoke concentrate is supplied to the foodstuff. This problem also arises with the device described in the PCT-patent application 84/02824, whereby a tube with a heated wall is applied in which the formation of mist of the sprayed non-heated smoke concentrate and air occurs. In the US patent specification 3,643,587 a complex device is described for smoking foodstuffs such as cheese, whereby it has been emphasized that there must be a difference in temperature between the foodstuff which is smoked and the mist to be sprayed, whereby the foodstuff has to be kept at a lower temperature than the temperature of the sprayed smoke concentrate, so that a condensation of the smoke concentrate on the foodstuff occurs. If it is desirable for e.g. meat that it is kept at a temperature of about 60°C it is possible that the smoke concentrate is sprayed by supplying steam instead of air to the sprayer, so that the sprayed smoke concentrate has a temperature of over 60°C.

Now a method and device have been developed whereby the problem of depositing smoke concentrate on heating elements is prevented and whereby a more equal distribution of the smoke over the foodstuff takes place. In connection with health considerations it is also important that the smoke concentrate is not overheated by means of heating elements, because with said overheating undesired reactions may occur between compounds present in the smoke concentrate, which may not only affect the taste of the smoked foodstuff but might also have a harmful effect with regard to health. A regular spray-supply and thus of smoke is important, therefore, and this is obtained with the method and device according to the invention. The method according to the invention is characterized in that liquid smoke concentrate heated to 30—110°C is supplied to the sprayer on the one hand and air is heated to 110—500°C on the other hand, after which the sprayed mixture is led through a heated space in which the generation of smoke takes place, said smoke being discharged and dispersed in the smoking room. Thus a very simple device for producing smoke from the concentrated smoke concentrate has been obtained and it is no longer necessary to provide heating elements in the smoking room.

A liquid smoke concentrate that may be used with the method under consideration is marketed by Hickory Specialities, Crossville, USA, by the brand name "Zesti Smoke". Dependent on the capacity of the smoking room and the type of sprayers 5—40 1/hour of liquid smoke concentrate are supplied to the smoking room, said smoke concentrate being heated in the sprayer or evaporator, to which also 8—20 N/ m³/hour of air is supplied which is also heated. The volume ratio heated liquid:heated air, expressed in parts by volume, will vary from 1:300 to 1:1500. As a result of the spraying action of the spayer air is sucked in from the smoking room by the sprayer and said intake air from the smoking room with a temperature as obtained in the smoking room, amounts to 40—200 m³/hour. Usually the temperature of the intake air will be 30—60°C.

The smoke sprayer according to the invention comprising a container for liquid smoke concentrate, heating element, air supply and sprayer is characterized according to the invention in that the heating element for the air and for the smoke concentrate are located upstream of the sprayer. Thus the sprayer sprays a mixture of heated air and heated smoke concentrate. Preferably the heating element for the liquid smoke concentrate and for the air is incorporated in a tubular evaporator having a central space in which the sprayer sprays the heated mist, said tubular opening discharging direct into the smoking room and making it possible to keep or bring the mist at/to a desired temperature so that the sprayed smoke concentrate produces the desired smoke development. Heating of the liquid smoke concentrate and of the supplied air takes place by direct heat-exchange, whereby it is possible to circuit a liquid, which is heated electrically or by steam, in the tubular evaporator. The temperature of the liquid smoke concentrate and of the air can then be regulated by adjusting the distance travelled by the liquid smoke concentrate and by the air through the heating means. The device for carrying out the method is characterized in that it comprises a smoking room in which the smoke sprayer or evaporator as described hereinabove is incorporated therein.

The invention will be further explained with reference to the following description whereby reference is made to the accompanying drawing, in which:

Figure 1 illustrates a smoke sprayer discharging direct into the smoking room.

Figure 1 illustrates the smoke sprayer which essentially comprises a cylindrical container 1 in which the liquid smoke concentrate 2 is present and the tubular evaporator 4 in which the liquid smoke concentrate and air are heated and supplied to sprayer 10/6. The liquid smoke concentrate 2 is supplied to pipe 7, located inside the tubular evaporator 4, by means of air pressure on container 1 via pipe 12, via standpipe 3 and flow meter 18, whereby the liquid smoke concentrate is heated by indirect heat exchanging by e.g. circulating a liquid such as glycerol or an oil, which is heated by means of a heating element 5, in the evaporator 4. On the other hand air is supplied to the evaporator 4 via pipe 8 which is in communication with pipe 11 and pipe 9. The air supply is regulated by means of the valves 13 and the air pressure is read on the manometers 14. For reasons of safety a non-return valve 16 is provided in the air pipe 11—8. The air heated in evaporator 4 which is supplied to sprayer 6—10 via pipe 8 is sprayed in sprayer nozzle 6, together with the liquid smoke concentrate so that a mist 19 is produced which is supplied to the central space 15, which is also heated, and is discharged in the direction indicated by arrow 17 into the smoke room.

The smoke sprayer illustrated in Figure 1 is of a simple construction which can be easily regulated so that a constant quality of the smoke is obtained in the smoking room.

In the device described a cooking process can be carried out and there the foodstuff can exude, be coloured, dried, baked and rinsed. The quantity of smoke concentrate applied amounts to about 100 ml of liquid per m³ of smoking room.

The parts of the device which come into contact with the smoke concentrate need to be made of stainless steel. At the end of the smoking process the air supply via pipe 12 is shut off and the air is only supplied via the pipes 11 and 8, so that the sprayer is blown empty, which reduces the risk of clogging in the sprayer.

## Claims

1. Method for smoking foodstuffs in a smoking room by supplying smoke to the foodstuff, said smoke being developed from a liquid smoke concentrate to which air is supplied and which is sprayed while being heated, characterized in that liquid smoke concentrate heated to 30—110°C is supplied to the sprayer on the one hand and air is heated to 110—500°C on the other hand, after which the sprayed mixture is led through a heated space in which the generation of smoke takes place, said smoke being discharged and dispersed in the smoking room.

2. Smoke sprayer comprising a container for liquid smoke concentrate, heating element, air supply and sprayer, characterized in that the heating element for the air and for the smoke concentrate is arranged upstream of the sprayer.

3. Smoke sprayer according to claim 2, characterized in that the sprayer discharges into a heated space which is in communication with the smoking room.

4. Smoke sprayer according to claims 2—3, characterized in that the heating system for the air, the heating system for the smoke concentrate and the heated space are assembled in a tubular heat exchanger.

5. Device for carrying out the method according to claim 1, characterized in that it includes a smoke sprayer as mentioned in claims 2—4.

## Patentansprüche

1. Verfahren zum Räuchern von Lebensmitteln in einer Räucherkammer unter Zuführen von Rauch zu den Lebensmitteln, wobei der Rauch aus einem flüssigen Rauchkonzentrat entwickelt wird, dem Luft zugeführt wird und das während des Erwärmens zerstäubt wurde, dadurch gekennzeichnet, daß das flüssige Rauchkonzentrat, das auf 30—110°C erwärmt wurde, dem Zerstäuber auf der einen Seite und auf 110 bis 500°C erwärmte Luft auf der anderen Seite zugeführt wird, worauf die zerstäubte Mischung in einen erwärmten Raum geleitet wird, in dem die Rauchbildung stattfindet, wobei Rauch abgegeben wird und dieser sich in der Räucherkammer verteilt.

2. Rauchzerstäuber mit einem Behälter für flüssiges Rauchkonzentrat, Heizelement, Zuluft und Zerstäuber, dadurch gekennzeichnet, daß das Heizelement für die Luft und für das Rauchkonzentrat stromaufwärts von dem Zerstäuber angeordnet ist.

3. Rauchzerstäuber nach Anspruch 2, dadurch gekennzeichnet, daß der Zerstäuber in einen erwärmten Raum Rauch abgibt, der wiederum mit der Räucherkammer verbunden ist.

4. Rauchzerstäuber nach Anspruch 2 oder 3, dadurch gekennzeichnet, daß das Heizungssystem für die Luft, das Heizungssystem für das Rauchkonzentrat und der erwärmte Raum in einem röhrenförmigen Wärmetauscher angeordnet sind.

5. Anlage zur Durchführung des Verfahrens nach Anspruch 1, dadurch gekennzeichnet, daß sie einen Rauchzerstäuber nach einem der Ansprüche 2 bis 4 besitzt.

**Revendications**

1. Procédé de fumage de produits alimentaires dans un fumoir par apport de fumée au produit alimentaire, ladite fumée étant développée à partir d'un concentré de fumée liquide auquel est apporté de l'air et qui est pulvérisé tout en étant chauffé, caractérisé en ce que le concentré de fumée liquide chauffé entre 30 et 110°C est fourni un pulvérisateur d'une part, et en ce que l'air est chauffé entre 110 et 500°C d'autre part, après quoi le mélange pulvérisé passe dans un espace chauffé dans lequel a lieu la production de fumée, ladite fumée étant introduite et dispersée dans le fumoir.

2. Pulvérisateur à fumée comprenant un récipient pour le concentré de fumée liquide, un élément chauffant, une alimentation en air et en pulvérisateur, caractérisé en ce que l'élément chauffant pour l'air et pour le concentré de fumée est disposé en amont du pulvérisateur.

3. Pulvérisateur à fumée selon la revendication 2, caractérisé en ce que le pulvérisateur débite dans un espace chauffé qui est en communication avec le fumoir.

4. Pulvérisateur à fumée selon les revendications 2 et 3, caractérisé en ce que le système de chauffage pour l'air, le système de chauffage pour le concentré de fumée et l'espace chauffé sont regroupés dans un échangeur de chaleur tubulaire.

5. Dispositif pour mettre en oeuvre le procédé selon la revendication 1, caractérisé en ce qu'il comprend un pulvérisateur à fumée selon les revendications 2 à 4.

FIG. 1